# EUROPEAN PATENT SPECIFICATION

(11) **EP 4 149 075 B1**
(45) Date of publication and mention of the grant of the patent: **17.07.2024**
(21) Application number: 22193945.7
(22) Date of filing: 05.09.2022
(51) Int. Cl.: H04L 41/06, H04L 41/16

(54) **AUTOMATIC SUPPRESSION OF NON-ACTIONABLE ALARMS WITH MACHINE LEARNING**
AUTOMATISCHE UNTERDRÜCKUNG VON NICHTAKTIONSFÄHIGEN ALARMEN MIT MASCHINENLERNEN
SUPPRESSION AUTOMATIQUE D'ALARMES NON ACTIONNABLES AVEC APPRENTISSAGE AUTOMATIQUE

(30) Priority: 08.09.2021 IN 202111040758; 25.10.2021 US 202117509111
(43) Date of publication of application: 15.03.2023
(73) Proprietor: Ciena Corporation, Hanover, MD 21076 (US)
(72) Inventor: CÔTÉ, David, Gatineau, J9H 3Y3 (CA); VENKATACHALAM, Maheshwaran, 638703 Tirupur (IN); TRIPLET, Thomas, Mano, K4M 1B5 (CA); PURANIK, Sudhan, 411021 Pune (IN); BRAHMANKAR, Saurabh Dinesh, 411045 Pune (IN); DOELLING, Phillip, Lucas, 75075 (US); DEORE, Yogeshwar Chatur, 411061 Pune (IN)
(74) Representative: Dehns

(56) References cited:
- ASRES MULUGETA WELDEZGINA ET AL: "Supporting Telecommunication Alarm Management System With Trouble Ticket Prediction", IEEE TRANSACTIONS ON INDUSTRIAL INFORMATICS, IEEE SERVICE CENTER, NEW YORK, NY, US, vol. 17, no. 2, 25 May 2020 (2020-05-25), pages 1459 - 1469, XP011821348, ISSN: 1551-3203, [retrieved on 20201119], DOI: 10.1109/TII.2020.2996942
- RAÃOL COSTA ET AL: "An Intelligent Alarm Management System for Large-Scale Telecommunication Companies", 12 October 2009, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 386 - 399, ISBN: 978-3-540-74549-5, XP019132007
- MOHAMMED SHADY A ET AL: "A Machine-Learning-Based Action Recommender for Network Operation Centers", IEEE TRANSACTIONS ON NETWORK AND SERVICE MANAGEMENT, IEEE, USA, vol. 18, no. 3, 8 July 2021 (2021-07-08), pages 2702 - 2713, XP011876160, DOI: 10.1109/TNSM.2021.3095463

## Description

### FIELD OF THE DISCLOSURE

The present disclosure generally relates to network management. More particularly, the present disclosure relates to systems and methods for automatic suppression of non-actionable alarms in a network with machine learning.

### BACKGROUND OF THE DISCLOSURE

Network operators monitor their networks to detect problems that are classified by network alarms (e.g., critical, major, minor, warning, etc.). Typically, this occurs in a Network Operations Center (NOC) using products such as Operations Support Systems (OSSs), Network Management Systems (NMSs), Network Assurance platforms, and the like. The network is becoming more complex with fewer network operators and with multiple layer networks (e.g., optical - Layer 0, Time Division Multiplexed (TDM) - Layer 1, packet - Layers 2 and above). This increased complexity and multi-layer networks creates a need for greater expertise in network monitoring, and there can be a multitude of alarms at any given time. There is a need to sift through this to determine priority, workflow, impact, etc. One alarm may be meaningless and not impact any end customers, whereas another alarm may have significant impact. There is a need to understand which alarms are important.

There have been approaches to add rule-based workflow capabilities where a network engineer defines alarms and actions which need to be taken on that alarm, but manual intervention is required to set up each workflow. Here, manual intervention is required to set up workflows, such as if a non-important alarm is occurring frequently. Users need to set up different workflows to perform actions, and static rules do not adapt to evolving networks and are cumbersome to maintain.

Some of the device vendors have the capability to suppress alarms at the device level itself by changing the device configuration but there are specific sets of alarms cannot be suppressed such as link down, power failure, line card failure, service disruption, etc.

There are some alarm correlation techniques in an NMS through which alarms can be correlated to main alarms, reducing the count of alarm displayed. The alarm correlation technique also has its limitation, e.g., if parent device is impacted then alarms related to child nodes, ports are suppressed but alarm correlation policy need to be configured as a prerequisite and this technique will not work if no correlation exists. Further, existing systems cannot predict which team should resolve the issue or the effort estimate. ASRES MULUGETA WELDEZGIA ET AL; IEEE TRANSACTIONS ON INDUSTRIAL INFORMATICS, IEEE SERVICE CENTER, NEW YORK, NY, US; vol. 17, no. 2, 25 May 2020 (2020-05-25) pages 1459-1469, XP011821348; ISSN: 1551-3203; DOI:10.1109/TII.2020.2996942 describes "Supporting telecommunication alarm management system with trouble ticket prediction". RAAol COSTA ET AL: 12 October 2009 (2009-10-12), SAT 2015 18TH INTERNATIONAL CONFERENCE AUSTIN, TX, USA, SEPTEMBER 24-27, 2015; LECTURE NOTES IN COMPUTERS SCIENCE; LECTURE NOTES COMPUTER, SPRINGER, BERLIN, HEIDELBERG, PAGE 386-399, xp019132007, ISBN: 978-3-540-74549-5 describes "An intelligent alarm management system for large-scale telecommunications companies".

### BRIEF SUMMARY OF THE DISCLOSURE

The present disclosure relates to systems and methods for automatic suppression of non-actionable alarms in a network with machine learning. The present disclosure includes automatically suppressing/reducing the noisy/non-important/non-actionable alarms using supervised and reinforcement learning techniques. The machine learning models are trained to show/filter only important/actionable alarms, based on implicit feedback from NOCs. This makes network operations faster, easier, and more cost effective for NOC teams. A prototype applied to field data from production networks show that the present disclosure performs at and can suppress in real-time 50% of all alarms, while maintaining a recall over 99% for important alarms.

In various embodiments, the present disclosure includes a method having steps, a system including at least one processor and memory with instructions that, when executed, cause the at least one processor to implement the steps, and a non-transitory computer-readable medium having instructions stored thereon for programming at least one processor to perform the steps.

The steps include receiving alarms from a network; utilizing a machine learning model to classify the alarms as one of important and non-important based on a plurality of insights including (1) roles of different teams or people, (2) predicted service impact, (3) predicted level of priority of resolving the alarm, and (4) predicted time and resource required for resolution; and displaying the important alarms, based on the plurality of insights, and suppressing display of the non-important alarms. The steps can further include training the machine learning model with historical alarm data that includes features related to an associated device and comments related to how a Network Operations Center (NOC) handles an associated alarm or group of alarms. The training can be via supervised machine learning with Network Operations Center (NOC) interactions used as labels. The training can be via reinforcement learning with Network Operations Center (NOC) interactions used as a reward.

The steps can further include collecting data related to any of importance of and action on the alarms including roles of different teams or people in the NOC; and classifying the alarms based on the roles of different teams or people. The steps can further include utilizing rules to group the alarms together and classifying by the machine learning model is performed on groups of alarms. The steps can further include utilizing a Natural Language Processing (NLP) model to extract features from interactions with the received alarms; and utilizing the extracted features to train the machine learning model. The steps can further include utilizing the NLP model to identify alarms that need to be resolved urgently relative to alarms that are less urgent and can be resolved during a maintenance window. The steps can further include measuring accuracy of the classified alarms; and, responsive to the accuracy being below a threshold, automatically retraining the machine learning model.

### BRIEF DESCRIPTION OF THE DRAWINGS

The present disclosure is illustrated and described herein with reference to the various drawings, in which like reference numbers are used to denote like system components/method steps, as appropriate, and in which:
FIGS. 1A and 1B are bar charts illustrating important/non-important alarms based on device type (FIG. 1A) and specific problem type (FIG. 1B).
FIG. 2 is a diagram of a self-adapting machine learning system for binary classification of important/not-important alarms in a network.
FIG. 3 is a diagram of a system with two machine learning models including a machine learning model to analyze actions and comments and the self-adapting machine learning system for binary classification.
FIG. 4 is a graph of recall versus alarm reduction to depict the model's prediction statistics.
FIG. 5 is a graph of the distribution of important/non-important alarms by severity for an example implementation.
FIG. 6 is a Venn diagram illustrating an example implementation combining the machine learning approach with a graph-based correlation solution.
FIG. 7 is a table of extraction of categorical features from text comments in field data.
FIG. 8 is a flowchart of an alarm suppression process.
FIG. 9 is a block diagram of a processing device.

### DETAILED DESCRIPTION OF THE DISCLOSURE

The present disclosure relates to systems and methods for automatic suppression of non-actionable alarms in a network with machine learning. The present disclosure includes automatically suppressing/reducing the noisy/non-important/non-actionable alarms using supervised and reinforcement learning techniques. The machine learning models are trained to show/filter only important/actionable alarms, based on implicit feedback from NOCs. This makes network operations faster, easier, and more cost effective for NOC teams. A prototype applied to field data from production networks show that the present disclosure performs at and can suppress in real-time 50% of all alarms, while maintaining a recall over 99% for important alarms.

In an embodiment, the present disclosure provides classification of alarms - to predict which alarms are actionable using ML, predict which team should act to resolve alarms, predict priority of resolving each alarm, predict service impact of each alarm, predict time and resource required to resolve each alarm, and the like. These predictions can be on individual alarms as well as groups of alarms.

In an embodiment, the present disclosure uses historical alarms data to train ML models, using features like Individual alarms: node name, device type, node location, specific problem, perceived severity; alarm groups: number of alarms in the group, topology relationship between devices raising the grouped alarms; comments: number of comments, assignation to a user, association to third party ticket, association to workflow; and the like. The historical ticket data can be used to label historical alarm data, e.g., presence of a ticket, ticket comments, associated services IDs.

In another embodiment, the present disclosure can use Reinforcement Learning (RL) or supervised Machine Learning (ML) to implement a classifier. Supervised ML can include Decision Tree, Random Forest, XGBoost, Multi-Layer Perceptron, Convolutional Neural Network, Recursive Neural Network, etc. with features (or their combination) used as Labels. The RL can include Q-learning, Deep Q Network, Actor-Critics, etc. with the features (or their combination) are used as Reward.

Advantageously, the present disclosure requires no explicit user feedback. Input features coming from NOC interactions with the ticketing system can include

| | |
|---|---|
| Ticket opening to label actionable alarm | |
| Time to resolution to label time required to resolve alarm | |
| Natural Language Processing of ticket comments and problem description to | |
| | i. Extract useful features for classification problem above |
| | ii. Semantic/sentiment analysis of comments to label urgency vs routine |
| Closed tickets to label actionable or not | |
| Ticket resolution and/or reopening to label wrong initial action or inaction | |

In another embodiment, Auto-ML machinery is utilized to retrain ML models automatically when necessary. Automatically retrain the model when accuracy degrades and promote model to production. This enables AI working "out of box" in generic products while still being customized for each NOC teams.

In another embodiment, the present disclosure can collect data related to any of importance of and action on the alarms including roles of different teams or people in the NOC; and classify the alarms based on the roles of different teams or people. This can include collecting data about the importance and "actionability" of alarms by analyzing how NOC staff handles the different alarm types (or not) in the ticketing system(s), considering the different roles or teams within the NOC. The classification of alarms' importance can be separately for each team or each role within NOC staff. An alarm can be important for somebody and not important for somebody else. ("Importance" is not universal).

In a further embodiment, the machine learning models can provide automatic follow-up actions because of the above insights including

| | |
|---|---|
| Rank and prioritize alarms by: | |
| | a. Actionable or not by a given team |
| | b. Predicted level of priority of resolving the alarm |
| | c. Predicted service impact |
| | d. Predicted time and resource required for resolution |
| Suppress non-actionable alarms | |
| Ignore alarms automatically handled by the network | |
| Create and update tickets | |
| Execute workflows | |
| | a. Workflows for important alarms such as send email notifications to relevant teams. |
| | b. Acknowledge important alarms and assign to NOC engineers. |

### Problem statement

Enterprise or service provider networks have thousands of devices (network devices, network elements, nodes, etc.). Each device generates different types of alarms such as link down, loss of communication, power module failure, etc. at high rates. Network engineers need to decide if each alarm is important or not important, and take actions like clearing or acknowledging, raising a ticket, etc., which is time consuming and requires significant expertise from many people. Managing this manually is possible but very expensive. That is why network assurance products attempt to automate alarm management as much as possible. Rule-based systems can be developed to help with this, but these systems are hard to maintain and cannot handle complex situations. Typical multi-vendor networks contain a wide variety of equipment, and no single developer has the necessary knowledge to code expert rules for all different equipment (e.g., wireless, optical, packet, etc.). Furthermore, there is no universal definition of an "important" alarm: it can be important for a team with specific responsibilities and not important for another team with different responsibilities. It is nearly impossible to implement such team-by-team rules in generic software products that are intended to work "out of the box".

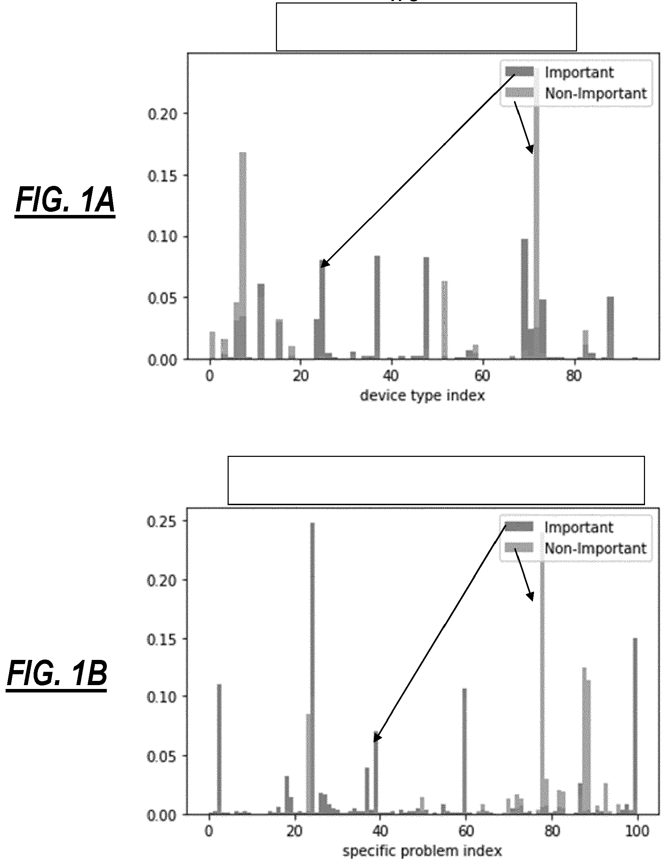

FIGS. 1A and 1B are bar charts illustrating important/non-important alarms based on device type (FIG. 1A) and specific problem type (FIG. 1B). As is shown here, typical networks include a large variety of devices and alarm types.

### Solution

To automate alarm management further, we propose to use Artificial Intelligence (Al)/Machine Learning (ML) models trained from historical alarm data and NOC ticket data. After seeing enough data, the AI learns which alarms require NOC actions to be resolved and which alarms can be safely ignored. This learning is performed with an auto-ML machinery that can work "out of the box" in generic software products. Then, the AI is used by a software system that can hide or highlight alarms and make targeted recommendations specifically for each sub-team within the NOC.

The idea is to build a self-evolving intelligent machine learning system. This system can automatically re-train/learn on the historical data and evaluate the performance on its own and continue to serve with the updated data patterns. The system not only takes care of itself, but can also take decisive actions, and trigger workflows.

This system operates with 3-step mechanism, as follows:
1) Data collection: For the given data range specified, the data can be fetched from the customer's premise. The system collects past data from a customer network monitoring system specifically includes alarms with severity, trouble ticket against alarms, User comments on alarms, device type that generates alarms, and specific problems.

For the given data range specified, the data is fetched from the customer's premise. We collect past data from customer network monitoring system specifically includes alarms with severity, trouble ticket against alarms, User comments on alarms, device type that generates alarms and specific problem.

Historical data from the network and from the tickets can be used as *implicit* feedback from the network operators to label the alarms from the networks. Because the feedback is implicit, our invention can integrate seamlessly with existing NOC workflows without adding extra burden on the network operators to manually labels datasets. Implicit feedback from the operator includes:

| |
|---|
| Ticket opening to label actionable alarm |
| Time to resolution to label time required to resolve alarm |
| Ticket comments and problem description |
| Closed tickets to label actionable or not |
| Ticket resolution and/or reopening to label wrong initial action or inaction |

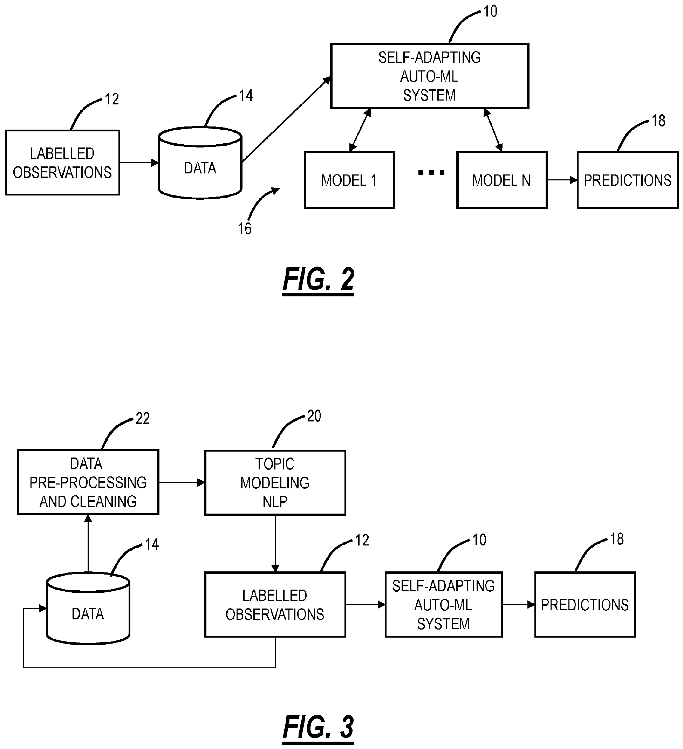

The ticket comments and description can be further analyzed using natural language processing techniques to derive useful feature and semantic/sentiment analysis to label the importance and urgency of the alarms, which is typically different from their severity (see FIG. 3).

2) Auto model training and Evaluation (tuning): The above data can used in 2 different ways. First, to label the alarms and train a supervised ML (SL) algorithm. The SL algorithm can be used to predict which alarms are actionable, which team should act to solve the problem, the expected time, and resources to resolve the issue, etc. Second, to build the reward function of a reinforcement learning (RL) algorithm. The action space of the RL algorithm is similar to the above, and the different actions the RL algorithm can take include increasing/decreasing the priority of the alarms or raise tickets and dispatch a particular team to resolve them.

In both cases, model training can happen on a customer's premise or on a different location (e.g., cloud) as per the customer's requirement. Because the data is implicitly labeled, it is possible to evaluate the performance of our algorithm using live customer data automatically and continuously, with no explicit human supervision.

Models can be retrained on a regular basis, and if the newly trained model improved the performance of the previous model, the new model can be automatically promoted to production. In addition, as the ML models are continuously evaluated, it is possible to optimize computational requirements by detecting if/when the accuracy of the model degrades over time and retrain the models only if the accuracy drops below some threshold.

### Alarm suppression on real-time systems

We have a live/streaming module in the solution which classifies inflowing network alarms into important/noise(non-important) with corresponding probability (of being important). It streams the incoming alarms from Kafka, loads the model from MLFlow, predicts, and publishes the result into output Kafka. And prediction output from Kafka can be consumed in many ways like triggering workflows, making decisive actions, and offering insights for a User Interface (UI) as a reporting tool/dashboard.

The problem is treated as "Classification" problem, and the goal is to classify alarms into important or non-important(noise) with corresponding probability using a Binary classifier ML technique with the history of alarms occurred in the network and the NOC tickets associated with alarms if any, which is been used for labelling.

The ML Model is trained using the history of fault alarms with necessary alarm attributes and labels as input. The trained model is used to classify the live network alarms into important or noise. The prediction results i.e., important or noise (non-important) will be updated on the alarm to filter out the important alarms by NOC and take measures quickly.

### Binary classification of important/not-important alarms

FIG. 2 is a diagram of a self-adapting machine learning system 10 for binary classification of important/not-important alarms in a network. Here, labelled observations 12 are in a database 14. These labelled observations 12 are used to train models 16 in the machine learning system 10 as well as input to the machine learning models 16 to make predictions 18. FIG. 3 is a diagram of a system with two machine learning models including a machine learning model 20 to analyze actions and comments and the self-adapting machine learning system 10 for binary classification. Here, the database 14 includes raw data that is pre-processed and cleaned 22. The machine learning model 20 includes Natural Language Processing (NLP) to provide the labelled observations 12 from the raw data. The labelled observations 12 are provided to the machine learning system 10 as in FIG. 2.

This sub-section documents an example implementation of an alarm suppression module. The performance of this module has been benchmarked against three field datasets from example network data.

### Self-adapting auto-ML system

A solution requiring a customer to manually label the data is not practical in the field and monitor/track the performance of the machine learning models 16 over the period once it is deployed on premise/location is challenging. To remedy the problem, we have built a solution where the machine learning models 16 are trained automatically and deployed to production only when it meets a certain criterion like comparing certain performance metrics of the newly trained model with the current production model against the same set of data. If meets the criteria, the new model automatically replaces the existing one.

The primary advantages of the system 10 include:
i) Automated model selection.
ii) Auto split data into train/validation sets powered by 5-fold cross validation.
iii) Optimizes based on the primary metric.
iv) Self-exit criteria, i.e., do not promote the new model if it is low in performance.

To serve this purpose, accuracy measurements can be logged over time (e.g., using a system like MLFlow) and the solution uses these logged metrics to make decisions on whether to promote the new model or not.

### ML modeling

The ML modelling can use a Supervised ML classification technique. A prototype was implemented using the XGBoost Classifier. For NLP related tasks, we use word embeddings and Count vectorizer to compute the n-gram distribution and the relative importance of parts of the comments using Term Frequency - Inverse Document Frequency (TF-IDF).

The input includes alarm history data that includes features of severity, network device type, and specific problem.

The labels include a presence of a NOC ticket or service and user comments. That is, the labels determine what the NOC did with this given alarm. In an embodiment, no ticket, service, or comments is itself a label from a non-important alarm.

The output is based on a classifier model, which is used to predict whether a live alarm is important or noise with corresponding probability.

### Key evaluation metrics

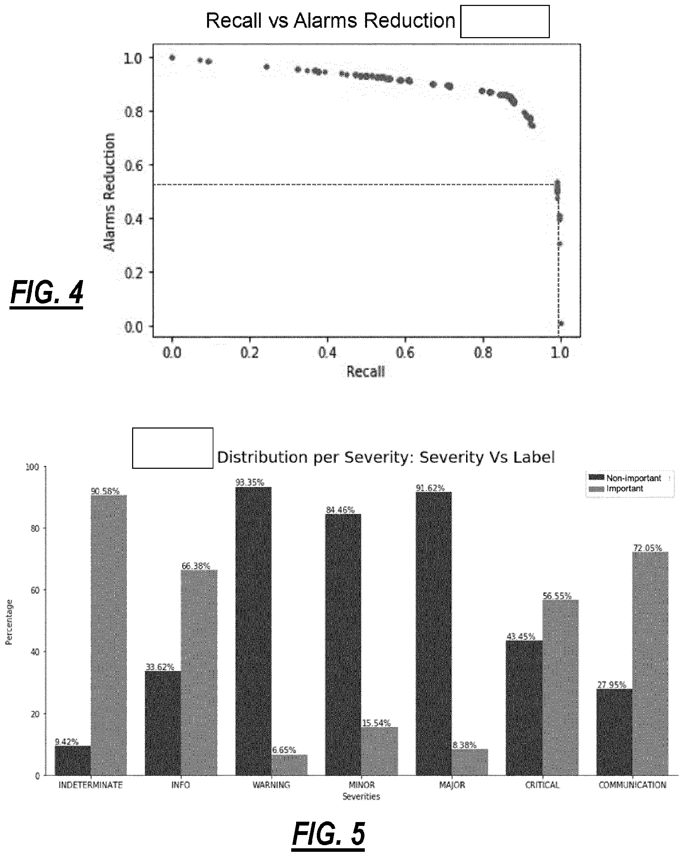

The key metrics for model evaluation here are Recall and Alarms reduction. **Criteria: Recall** ≥ 99%, so that lesser false negatives (max 1%). This is because, classification should not miss out alarm being important is predicted as non-important (a false negative). FIG. 4 is a graph of recall versus alarm reduction to depict the model's prediction statistics.

It is helpful to supress noise/non-important alarms from all type of network infrastructures. It will increase efficiency of NOC engineer to target, focus on only important alarms and will reduce Mean time to repair (MTTR) by prioritising important network impacts. This effectively achieve all Service Layer Agreements (SLAs) and save penalties for agreed SLA, and this will be catalyst as revenue generation solution. The proposed self-adaptive solution works out of the box with no user input to label datasets, no rules to manually configure and will adapt over time to the behavior of the customer.

The decisions and insights can be offered and displayed in a Ul. The customer/NOC engineer can identify and analysis, which device make/model and even which specific exact end point (e.g., ports such as SFP/XFPs, service network cards, flash etc) is affecting network infra more always and contributing for important alarm or either way making noise (non-important alarms). These insights may be useful to shape customer/NOC engineer's decisions for new implementations, for designing new network services and any new network devices procurements and inventory managements. This also helps to identify what type of exact specific problems/Root Cause Analysis (RCA) are more contributing network impacts, and same can helps to strategic planning of NOC operations and resources.

### Example implementation

FIG. 5 is a graph of the distribution of important/non-important alarms by severity for an example implementation. This chart shows there is the presence of non-important(noise) alarms in all the levels of severity and hence this use case can suppress a major portion of alarms. This was an example network and with recall = 99%, Recall versus Alarm Reduction is the key for the use case, as illustrated in FIG. 4. The data set includes about 8.8 million alarms with labels on about 1.15 million (about 90% of the alarms were labelled non-important (noisy) and about 10% of the alarms were labelled as important). There was a train to test ration of 80:20 and applied with 5-fold-cross validation. The results include recall of 99% and a reduction in the number of alarms of about 53%.

We note that the actual alarm importance for this NOC is significantly different than the raw alarms' severity reported by the equipment.

FIG. 4 shows how well the solution can work even if we put on the recall of 99%, which in fact a big number. This also means we'll be able to suppress a good amount of noisy/non-important alarms (53% in this case) without compromising much on important alarms. Also, the goal is to have better precision (lesser the false positives, more the reduction) with the above Recall criteria satisfied.

### From individual alarms to alarm groups: combining new ML solution with already-existing alarm correlation

There can be a rule-based algorithm to group together alarms raised at the same time and originating from related devices. Instead of looking at all individual alarms, NOC teams can look at groups of alarms which is more efficient.

In this sub-section we demonstrate that: a) our new ML approach is largely orthogonal to the previous alarm grouping and enables further NOC efficiency, and b) that a similar ML approach could be performed on alarm groups instead of individual alarms in the future.

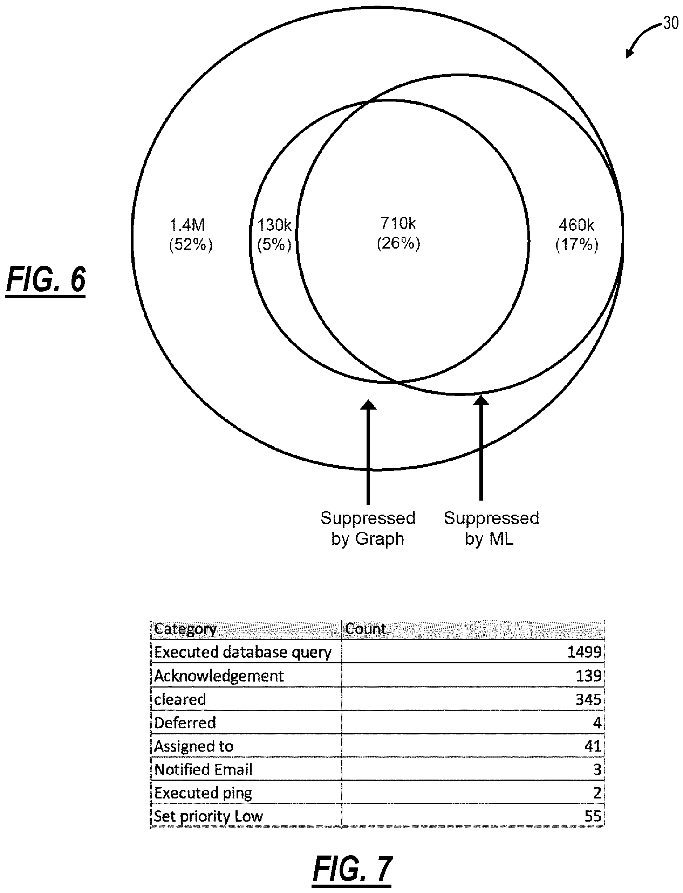

FIG. 6 is a Venn diagram 30 illustrating an example implementation combining the machine learning approach with a graph-based correlation solution. If we work with both the solutions together, then we can achieve more suppression. FIG. 6 is a customer-based graph showing ML alone has offered around 20% more, whereas an extra 5% suppression is offered by Graph alone, both 1:1 has offered 26% Alarm suppression. Also, we have prediction results from customer's historical data. Below is the table that gives information about alarm suppression rate and count of alarm suppressed using historical data of customers A and B.

**Table 1: alarm suppression rate and count of alarm suppressed**

| Customer | Graph based Suppression rate | ML model Suppression rate | Improvement Over existing graph-based suppression ( graph-based + ML mutual suppression rate) |
|---|---|---|---|
| A | 31.1% | 43.50% | 48.4% |
| B | 3.7% | 29.90% | 30.2% |

### Expanded analysis of comments in NOC tickets

The ML application described above was a binary classifier where the training data is labeled with a simple "is there at least one comment in the ticket: yes/no." In this section, we explain how this can be further improved with a more advanced analysis of text present in all comments. Referring back to FIG. 3, there are two ML models now:
1. One ML model 20 to extract categorical features from the comments' text
2. One ML model 10 to combine the comments features with other alarm features and perform a final classification of the alarm or alarm group

### Leveraging Natural Language Processing (NLP)

Most of the critical issues are handled and being tracked in the form of tickets or logged in the form of notes/user comments. This is crucial info that remains unused; however, such a piece of valuable information can be utilized, and business automation can be achieved at a large scale with a high level of accuracy.

At present, along with manual labeling tasks, we also leverage the Natural Language Processing type of machine learning for labeling the data which is further used by multi-class and multi-label classification tasks. This is a topic modeling where similar information is brought together using our advanced machine learning techniques. These topics are then further used for labeling.

Not only this, but we want to take this NLP use to the next level. Usually, bigger workforces are groups of components connected in a network. So, when a component goes down, it takes many other components along with it. It may even take days to figure out what went wrong and find the root cause. (e.g., ports-SFP/XFPs, service network cards, flash etc.).

Hence, it is essential to notify the component owners on time so that proper measures can be taken to prevent this from happening. Unfortunately, it is difficult for anyone to be aware of all the components and hence tickets are being routed to the wrong team. Hence, we think we could use NLP to solve this issue.

We propose the solution where along with the classification task, we want to provide actionable recommendations to the user on what to be done to tackle troublesome tickets/alarms. Here the idea is to collect historic trouble tickets data and note down the actions previously taken in order to resolve it. This Problem <-> Solution pair can be used to extract insightful information using NLP which is further consumed by Recommendation ML Systems to provide Root Cause analysis and actionable insights.

### Prototype results

A prototype implementation of NLP techniques is presently under development, based on extended field datasets that include all comments. Preliminary categorical feature extraction results are in FIG. 7.

An important result is that numerous comments are automatically generated by NOC workflows (categorized "Executed database query" in FIG. 7), and hence are not indicative that a manual NOC action needed to be taken. Conversely, we see that a smaller number of tickets were assigned to individuals, which suggests that a manual action is necessary.

Expanding the comments analysis will enable a more granular classification of the alarm or alarm-group importance and actionability. For example, ML models can be developed to differentiate auto-generated comments from human-written comments. Standard sentiment analysis techniques can be used on human-generated comments to evaluate the level of urgency of the associated alarm(s).

### Utilization of Reinforcement Learning

An alternative implementation can be done with Reinforcement Learning instead of supervised ML. Instead of labelling alarm datasets with NOC tickets, we can define Reward functions based on arbitrary combinations of similar inputs. This approach is especially useful to optimize alarm suppression or prioritization based on numerical criteria (while the supervised ML labels are good for categorical classes). For example, we could define Reward functions from arbitrary combination of time-to-resolution, number of affected services, availability of NOC team staff, etc.

In general, RL includes seeking to learn what to do given a problem, i.e., an optimal mapping from its current state to some action, so as to maximize the reward signal in the long run. Often times, an application does not have any a priori knowledge of its environment and must discover which actions yield the most reward by trying them out. This leads to the trade-off between exploration and exploitation. The application must exploit what it already knows in order to obtain rewards, but also needs to explore in order to make better actions in the future.

The Actions can be: "ignore this alarm", "top-prioritize this alarm", "assign this alarm to team XYZ", etc. And the State is essentially the same features as above SL application.

Once State, Reward and Action(s) are defined, RL training is performed with the usual machinery. As a result, RL model will recommend alarm handling logic to maximize the long-term reward.

To achieve auto-ML, RL training can be performed continuously on-premises after the initial offline pre-training.

### Alarm suppression process

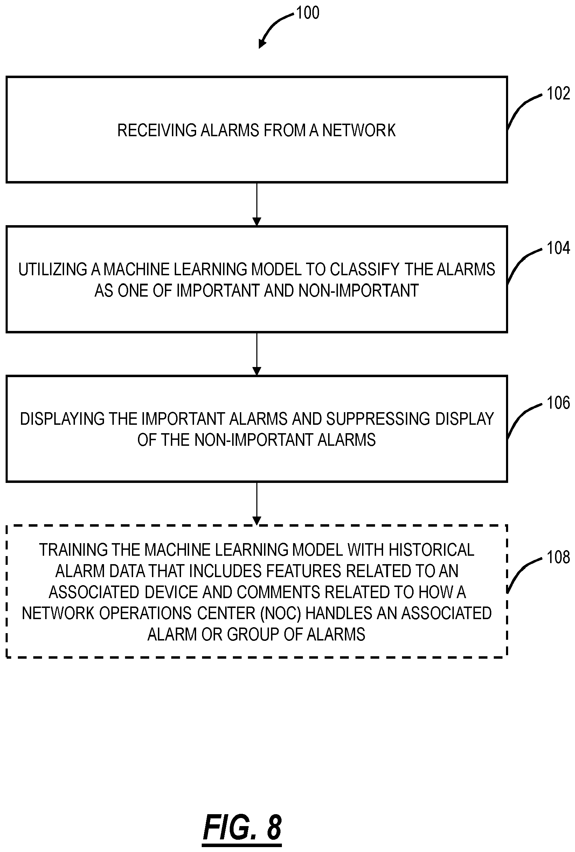

FIG. 8 is a flowchart of an alarm suppression process 100. The process 100 can be a method having steps, implemented via a system including at least one processor and with instructions that, when executed, cause the at least one processor to implement the steps, and as non-transitory computer-readable medium having instructions stored thereon for programming at least one processor to perform the steps.

The steps include receiving alarms from a network (step 102); utilizing a machine learning model to classify the alarms as one of important and non-important (step 104); and displaying the important alarms and suppressing display of the non-important alarms (step 106). The steps can further include training the machine learning model with historical alarm data that includes features related to an associated device and comments related to how a Network Operations Center (NOC) handles an associated alarm or group of alarms (step 108). The training can be via supervised machine learning with the features such as Network Operations Center (NOC) interactions used as labels or via reinforcement learning with the features used as a reward.

The features can be determined based on a ticket opened by the NOC. The machine learning model can have a recall set to at least 99%. The steps can further include utilizing rules to group the alarms together and the utilizing is performed on groups of alarms. The steps can further include utilizing a Natural Language Processing (NLP) model to extract features from the received alarms; and utilizing the extracted features to train the machine learning model. The steps can further include measuring accuracy of the classified alarms; and responsive to the accuracy being below a threshold, automatically retraining the machine learning model.

### Example processing device architecture

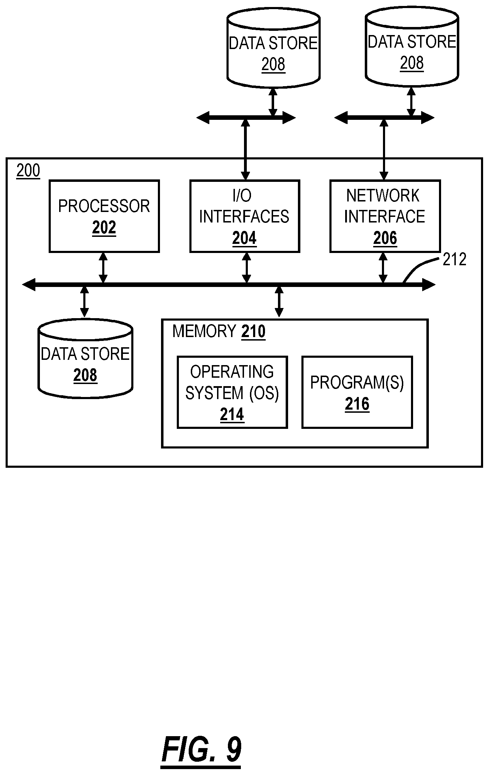

FIG. 9 is a block diagram of a processing device 200. The processing device 200 may be a digital computer that, in terms of hardware architecture, generally includes a processor 202, input/output (I/O) interfaces 204, a network interface 206, a data store 208, and memory 210. It should be appreciated by those of ordinary skill in the art that FIG. 9 depicts the processing device 200 in an oversimplified manner, and a practical embodiment may include additional components and suitably configured processing logic to support known or conventional operating features that are not described in detail herein. The components (202, 204, 206, 208, and 210) are communicatively coupled via a local interface 212. The local interface 212 may be, for example, but not limited to, one or more buses or other wired or wireless connections, as is known in the art. The local interface 212 may have additional elements, which are omitted for simplicity, such as controllers, buffers (caches), drivers, repeaters, and receivers, among many others, to enable communications. Further, the local interface 212 may include address, control, and/or data connections to enable appropriate communications among the aforementioned components.

The processor 202 is a hardware device for executing software instructions. The processor 202 may be any custom made or commercially available processor, a Central Processing Unit (CPU), an auxiliary processor among several processors associated with the processing device 200, a semiconductor-based microprocessor (in the form of a microchip or chipset), or generally any device for executing software instructions. The processor 202 can include at least one processor as well as multiple processors. When the processing device 200 is in operation, the processor 202 is configured to execute software stored within the memory 210, to communicate data to and from the memory 210, and to generally control operations of the processing device 200 pursuant to the software instructions. The I/O interfaces 204 may be used to receive user input from and/or for providing system output to one or more devices or components.

The network interface 206 may be used to enable the processing device 200 to communicate on a network, such as the Internet 104. The network interface 206 may include, for example, an Ethernet card or adapter or a Wireless Local Area Network (WLAN) card or adapter. The network interface 206 may include address, control, and/or data connections to enable appropriate communications on the network. A data store 208 may be used to store data. The data store 208 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof.

Moreover, the data store 208 may incorporate electronic, magnetic, optical, and/or other types of storage media. In one example, the data store 208 may be located internal to the processing device 200, such as, for example, an internal hard drive connected to the local interface 212 in the processing device 200. Additionally, in another embodiment, the data store 208 may be located external to the processing device 200 such as, for example, an external hard drive connected to the I/O interfaces 204 (e.g., SCSI or USB connection). In a further embodiment, the data store 208 may be connected to the processing device 200 through a network, such as, for example, a network-attached file server.

The memory 210 may include any of volatile memory elements (e.g., random access memory (RAM, such as DRAM, SRAM, SDRAM, etc.)), nonvolatile memory elements (e.g., ROM, hard drive, tape, CDROM, etc.), and combinations thereof. Moreover, the memory 210 may incorporate electronic, magnetic, optical, and/or other types of storage media. Note that the memory 210 may have a distributed architecture, where various components are situated remotely from one another but can be accessed by the processor 202. The software in memory 210 may include one or more software programs, each of which includes an ordered listing of executable instructions for implementing logical functions. The software in the memory 210 includes a suitable Operating System (O/S) 214 and one or more programs 216. The operating system 214 essentially controls the execution of other computer programs, such as the one or more programs 216, and provides scheduling, input-output control, file and data management, memory management, and communication control and related services. The one or more programs 216 may be configured to implement the various processes, algorithms, methods, techniques, etc. described herein.

### Cloud

The processing device 200 can be used to form a cloud system, such as a private cloud, a public cloud, a combination of a private cloud and a public cloud (hybrid cloud), or the like. Cloud computing systems and methods abstract away physical servers, storage, networking, etc., and instead offer these as on-demand and elastic resources. The National Institute of Standards and Technology (NIST) provides a concise and specific definition which states cloud computing is a model for enabling convenient, on-demand network access to a shared pool of configurable computing resources (e.g., networks, servers, storage, applications, and services) that can be rapidly provisioned and released with minimal management effort or service provider interaction. Cloud computing differs from the classic client-server model by providing applications from a server that are executed and managed by a client's web browser or the like, with no installed client version of an application required. Centralization gives cloud service providers complete control over the versions of the browser-based and other applications provided to clients, which removes the need for version upgrades or license management on individual client computing devices. The phrase "Software as a Service" (SaaS) is sometimes used to describe application programs offered through cloud computing. A common shorthand for a provided cloud computing service (or even an aggregation of all existing cloud services) is "the cloud." In an embodiment, the systems and methods described herein can be implemented as a cloud service or SaaS.

### Conclusion

It will be appreciated that some embodiments described herein may include or utilize one or more generic or specialized processors ("one or more processors") such as microprocessors; Central Processing Units (CPUs); Digital Signal Processors (DSPs): customized processors such as Network Processors (NPs) or Network Processing Units (NPUs), Graphics Processing Units (GPUs), or the like; Field-Programmable Gate Arrays (FPGAs); and the like along with unique stored program instructions (including both software and firmware) for control thereof to implement, in conjunction with certain non-processor circuits, some, most, or all of the functions of the methods and/or systems described herein. Alternatively, some or all functions may be implemented by a state machine that has no stored program instructions, or in one or more Application-Specific Integrated Circuits (ASICs), in which each function or some combinations of certain of the functions are implemented as custom logic or circuitry. Of course, a combination of the aforementioned approaches may be used. For some of the embodiments described herein, a corresponding device in hardware and optionally with software, firmware, and a combination thereof can be referred to as "circuitry configured to," "logic configured to," etc. perform a set of operations, steps, methods, processes, algorithms, functions, techniques, etc. on digital and/or analog signals as described herein for the various embodiments.

Moreover, some embodiments may include a non-transitory computer-readable medium having instructions stored thereon for programming a computer, server, appliance, device, at least one processor, circuit/circuitry, etc. to perform functions as described and claimed herein. Examples of such non-transitory computer-readable medium include, but are not limited to, a hard disk, an optical storage device, a magnetic storage device, a Read-Only Memory (ROM), a Programmable ROM (PROM), an Erasable PROM (EPROM), an Electrically EPROM (EEPROM), Flash memory, and the like. When stored in the non-transitory computer-readable medium, software can include instructions executable by one or more processors (e.g., any type of programmable circuitry or logic) that, in response to such execution, cause the one or more processors to perform a set of operations, steps, methods, processes, algorithms, functions, techniques, etc. as described herein for the various embodiments.

## Claims

1. A method (100) comprising steps of:
receiving (102) alarms from a network;
utilizing (104) a machine learning model to classify the alarms as one of important and non-important based on a plurality of insights including (1) roles of different teams or people, (2) predicted service impact, (3) predicted level of priority of resolving the alarm, and (4) predicted time and resource required for resolution; and
displaying (106) the important alarms based on the plurality of insights, and suppressing display of the non-important alarms.

2. The method (100) as claimed in claim 1, wherein the steps further include
training (108) the machine learning model with historical alarm data that includes features related to an associated device and comments related to how a Network Operations Center (NOC) handles an associated alarm or group of alarms.

3. The method (100) as claimed in claim 2, wherein the training (108) is via supervised machine learning with Network Operations Center (NOC) interactions used as labels (12).

4. The method (100) as claimed in claim 2, wherein the training is via reinforcement learning with Network Operations Center (NOC) interactions used as a reward.

5. The method (100) as claimed in any one of claims 1 to 4, wherein the steps further include
collecting data related to any of importance of and action on the alarms including roles of different teams or people in the NOC; and
classifying the alarms based on the roles of different teams or people.

6. The method (100) as claimed in any one of claims 1 to 5, wherein the steps further include
utilizing rules to group the alarms together and classifying by the machine learning model is performed on groups of alarms.

7. The method (100) as claimed in any one of claims 1 to 6, wherein the steps further include
utilizing a Natural Language Processing (NLP) model to extract features from interactions with the received alarms.

8. The method (100) as claimed in claim 7, wherein the steps further include utilizing the extracted features to train the machine learning model.

9. The method (100) as claimed in claim 7, wherein the steps further include
utilizing the NLP model to identify alarms that need to be resolved urgently relative to alarms that are less urgent and can be resolved during a maintenance window.

10. The method (100) as claimed in any one of claims 1 to 9, wherein the steps further include
measuring accuracy of the classified alarms; and
responsive to the accuracy being below a threshold, automatically retraining the machine learning model.

11. A system (200) comprising:
a data base configured to receive alarms and associated data from a network;
one or more processors (202); and
memory (210) storing instructions that, when executed, cause the one or more processors to implement the method as claimed in any one of claims 1 to 10.

12. A non-transitory computer-readable medium comprising instructions that, when executed, cause one or more processors to implement the method as claimed in any one of claims 1 to 10.

## Patentansprüche

1. Verfahren (100), das folgende Schritte umfasst:
Empfangen (102) von Alarmen aus einem Netzwerk;
Verwenden (104) eines Modells für maschinelles Lernen, um die Alarme auf der Grundlage einer Vielzahl von Erkenntnissen als wichtig und unwichtig zu klassifizieren, beinhaltend (1) Rollen verschiedener Teams oder Personen, (2) der vorhergesagten Auswirkungen auf den Dienst, (3) der vorhergesagten Prioritätsstufe für die Lösung des Alarms und (4) der vorhergesagten Zeit und Ressourcen, die für die Lösung erforderlich sind; und
Anzeigen (106) der wichtigen Alarme auf der Grundlage der Vielzahl von Erkenntnissen und Unterdrücken der Anzeige der unwichtigen Alarme.

2. Verfahren (100) nach Anspruch 1, wobei die Schritte weiter Folgendes beinhalten
Trainieren (108) des Modells für maschinelles Lernen mit historischen Alarmdaten, die Merkmale in Bezug auf eine zugehörige Vorrichtung und Kommentare in Bezug darauf beinhalten, wie ein Network Operations Center (NOC) einen zugehörigen Alarm oder eine Gruppe von Alarmen handhabt.

3. Verfahren (100) nach Anspruch 2, wobei das Training (108) über überwachtes maschinelles Lernen erfolgt und die Interaktionen des Network Operations Center (NOC) als Kennzeichnungen (12) verwendet werden.

4. Verfahren (100) nach Anspruch 2, wobei das Training über bestärkendes Lernen erfolgt und Interaktionen mit dem Network Operations Center (NOC) als Belohnung verwendet werden.

5. Verfahren (100) nach einem der Ansprüche 1 bis 4, wobei die Schritte weiter Folgendes beinhalten
Sammeln von Daten über jede beliebige von einer Wichtigkeit der Alarme und eine daraufhin ergriffene Maßnahme, beinhaltend Rollen verschiedener Teams oder Personen im NOC; und
Klassifizieren der Alarme auf der Grundlage der Rollen verschiedener Teams oder Personen.

6. Verfahren (100) nach einem der Ansprüche 1 bis 5, wobei die Schritte weiter Folgendes beinhalten
Verwenden von Regeln, um die Alarme zusammen zu gruppieren, und wobei Klassifizieren durch das Modell für maschinelles Lernen an Gruppen von Alarmen durchgeführt wird.

7. Verfahren (100) nach einem der Ansprüche 1 bis 6, wobei die Schritte weiter Folgendes beinhalten
Verwenden eines Natural Language Processing (NLP)-Modells, um Merkmale aus Interaktionen mit den empfangenen Alarmen zu extrahieren.

8. Verfahren (100) nach Anspruch 7, wobei die Schritte weiter Folgendes beinhalten
Verwenden der extrahierten Merkmale zum Trainieren des Modells für maschinelles Lernen.

9. Verfahren (100) nach Anspruch 7, wobei die Schritte weiter Folgendes beinhalten
Verwenden des NLP-Modells zur Identifizierung von Alarmen, die dringend behoben werden müssen, im Vergleich zu Alarmen, die weniger dringend sind und während eines Wartungsfensters behoben werden können.

10. Verfahren (100) nach einem der Ansprüche 1 bis 9, wobei die Schritte weiter Folgendes beinhalten
Messen der Genauigkeit der klassifizierten Alarme; und
als Reaktion darauf, dass die Genauigkeit unter einem Schwellenwert liegt, automatisch erneutes Trainieren des Modells für maschinelles Lernen.

11. System (200), umfassend:
eine Datenbank, die so konfiguriert ist, dass sie Alarme und zugehörige Daten aus einem Netzwerk empfängt;
einen oder mehrere Prozessoren (202); und
Speicher (210), der Anweisungen speichert, die, wenn sie ausgeführt werden, den einen oder die mehreren Prozessoren veranlassen, das Verfahren nach einem der Ansprüche 1 bis 10 zu implementieren.

12. Nichtflüchtiges computerlesbares Medium, das Anweisungen umfasst, die, wenn sie ausgeführt werden, einen oder mehrere Prozessoren veranlassen, das Verfahren nach einem der Ansprüche 1 bis 10 zu implementieren.

## Revendications

1. Procédé (100) comprenant les étapes consistant à :
recevoir (102) des alarmes provenant d'un réseau ;
utiliser (104) un modèle d'apprentissage automatique pour classer les alarmes comme étant importantes et non importantes sur la base d'une pluralité d'informations incluant (1) les rôles de différentes équipes ou personnes, (2) l'impact prédit sur le service, (3) le niveau prédit de priorité de résolution de l'alarme, et (4) le temps et les ressources prévus nécessaires à la résolution ; et
afficher (106) les alarmes importantes sur la base de la pluralité d'informations, et supprimer l'affichage des alarmes non importantes.

2. Procédé (100) selon la revendication 1, dans lequel les étapes incluent en outre
l'entraînement (108) du modèle d'apprentissage automatique avec des données d'alarme historiques qui incluent des fonctionnalités liées à un dispositif associé et des commentaires liés à la façon dont un centre d'opérations de réseau (NOC) gère une alarme ou un groupe d'alarmes associé.

3. Procédé (100) selon la revendication 2, dans lequel l'entraînement (108) s'effectue par le biais d'un apprentissage automatique supervisé avec des interactions du centre d'opérations de réseau (NOC) utilisées comme étiquettes (12).

4. Procédé (100) selon la revendication 2, dans lequel l'entraînement s'effectue par le biais d'un apprentissage par renforcement avec des interactions du centre d'opérations de réseau (NOC) utilisées comme récompense.

5. Procédé (100) selon l'une quelconque des revendications 1 à 4, dans lequel les étapes incluent en outre
la collecte de données liées à l'une quelconque parmi l'importance des alarmes et l'action sur celles-ci, incluant les rôles de différentes équipes ou personnes au sein du NOC ; et
le classement des alarmes sur la base des rôles de différentes équipes ou personnes.

6. Procédé (100) selon l'une quelconque des revendications 1 à 5, dans lequel les étapes incluent en outre
l'utilisation de règles pour regrouper les alarmes et le classement par le modèle d'apprentissage automatique est effectué sur des groupes d'alarmes.

7. Procédé (100) selon l'une quelconque des revendications 1 à 6, dans lequel les étapes incluent en outre
l'utilisation d'un modèle de traitement du langage naturel (NLP) pour extraire des fonctionnalités des interactions avec les alarmes reçues.

8. Procédé (100) selon la revendication 7, dans lequel les étapes incluent en outre
l'utilisation des fonctionnalités extraites pour entraîner le modèle d'apprentissage automatique.

9. Procédé (100) selon la revendication 7, dans lequel les étapes incluent en outre
l'utilisation du modèle NLP pour identifier les alarmes qui doivent être résolues de toute urgence par rapport aux alarmes qui sont moins urgentes et qui peuvent être résolues pendant une fenêtre de maintenance.

10. Procédé (100) selon l'une quelconque des revendications 1 à 9, dans lequel les étapes incluent en outre
la mesure de la précision des alarmes classées ; et
en réponse au fait que la précision est inférieure à un seuil, le nouvel entraînement automatique du modèle d'apprentissage automatique.

11. Système (200) comprenant :
une base de données configurée pour recevoir des alarmes et des données associées provenant d'un réseau ;
un ou plusieurs processeurs (202) ; et
une mémoire (210) stockant des instructions qui, lorsqu'elles sont exécutées, amènent les un ou plusieurs processeurs à mettre en oeuvre le procédé selon l'une quelconque des revendications 1 à 10.

12. Support non transitoire lisible par ordinateur comprenant des instructions qui, lorsqu'elles sont exécutées, amènent un ou plusieurs processeurs à mettre en oeuvre le procédé selon l'une quelconque des revendications 1 à 10.
